# EUROPEAN PATENT APPLICATION

(11) **EP 4 600 824 A1**
(43) Date of publication of application: **13.08.2025**
(21) Application number: 24813676.4
(22) Date of filing: 05.01.2024
(51) Int. Cl.: G06F 9/50

(54) **INFORMATION SENDING METHOD, ELECTRONIC DEVICE, AND STORAGE MEDIUM**

(30) Priority: 29.05.2023 CN 202310617998
(71) Applicant: Honor Device Co., Ltd., Shenzhen, Guangdong 518040 (CN)
(72) Inventor: YANG, Zudi, Shenzhen, Guangdong 518040 (CN); GUO, Daoxin, Shenzhen, Guangdong 518040 (CN)
(74) Representative: Gill Jennings & Every LLP
(86) International application number: PCT/CN2024/070863
(87) International publication number: WO 2024/244470

(57) **Abstract**

This application discloses an information sending method, an electronic device, and a storage medium, and pertains to the field of computer technologies. The method includes: A main thread of a first process creates a first child thread and a second child thread, where the first child thread can be called by the main thread through a first function, and cannot be called by the main thread through a function other than the first function, the second child thread can be called by the main thread through a second function other than the first function, one of the first function and the second function is used to send window information to a second process, and the other is used to indicate the second process to release buffer space. The main thread runs the first function to transfer first target information to the first child thread. After receiving the first target information, the first child thread sends the first target information to the second process. In this application, an abnormal state of one of the first function and the second function does not affect running of the other. This avoids a performance problem caused by an abnormal state of the first function or the second function.

## Description

This application claims priority to Chinese Patent Application No. 202310617998.9, filed with the China National Intellectual Property Administration on May 29, 2023 and entitled "INFORMATION SENDING METHOD, ELECTRONIC DEVICE, AND STORAGE MEDIUM", which is incorporated herein by reference in its entirety.

### TECHNICAL FIELD

This application relates to the field of computer technologies, and in particular, to an information sending method, an electronic device, and a storage medium.

### BACKGROUND

With development of computer technologies, electronic devices such as mobile phones and tablet computers have become an indispensable part of people's daily lives. A screen of an electronic device can display windows of various applications, providing good visual and operation experience for a user.

Currently, window information may be transmitted between different processes in the electronic device through inter-process communication. However, when a function that is in one process and that is used to send window information to another process is in an abnormal state, running of another function in the process is affected, causing a performance problem.

### SUMMARY

This application provides an information sending method, an electronic device, and a storage medium, to avoid a performance problem caused by an abnormal state of a first function. The technical solutions are as follows:

According to a first aspect, an information sending method is provided. In this method, a main thread of a first process creates a first child thread and a second child thread. The main thread runs a first function to transfer first target information to the first child thread. After receiving the first target information transferred by the main thread, the first child thread sends the first target information to a second process.

The first process is a process that can obtain window information. For example, the first process may be a SurfaceFlinger process. Certainly, the first process may alternatively be another process that can obtain the window information.

The first child thread can be called by the main thread through a first function, and cannot be called by the main thread through a function other than the first function. In this case, the first child thread is used to independently execute a sending task of the first function. Only when running the first function, the main thread can call the first child thread to execute the sending task. The main thread cannot call the first child thread when running another function.

The second child thread can be called by the main thread through a second function other than the first function. In this case, the second child thread is used to execute a sending task of the second function. When running the second function, the main thread can call the second child thread to execute the sending task. Optionally, the second child thread cannot be called by the main thread through a function other than the second function. In this case, the second child thread is used to independently execute the sending task of the second function. Alternatively, the second child thread can be called by the main thread through a function other than the first function and the second function. In this case, the second child thread performs sending tasks of all functions of a plurality of functions in a serial manner.

The main thread can run at least the first function and the second function. One of the first function and the second function is used to send window information to a second process, and the other is used to indicate the second process to release buffer space. The second process is a process other than the first process. Second processes corresponding to the first function and the second function may be the same or different. For example, the first function may be an updateInputFlinger function, and the second function may be a ReleaseBuffer function. In this case, a second process corresponding to the first function is a process that needs window information, and a second process corresponding to the second function is a process that needs to release buffer space. Alternatively, the first function may be a ReleaseBuffer function, and the second function may be an updateInputFlinger function. In this case, a second process corresponding to the first function is a process that needs to release buffer space, and a second process corresponding to the second function is a process that needs window information. For example, the process that needs the window information may be a SystemServer process. The SystemServer process includes an InputDispatcher thread, and the InputDispatcher thread may deliver a touch event based on the window information.

The first target information is information that needs to be sent by the first function to the second process. For example, if the first function is used to send the window information to the second process, the first target information is target window information. Alternatively, if the first function is used to indicate the second process to release buffer space, the first target information is buffer space release information. The target window information may be window information of some or all windows displayed by the electronic device.

In this application, the main thread can call, by running the first function, the first child thread to execute the sending task, and the main thread can call, by running the second function, the second child thread to execute the sending task. Running of the first child thread and that of the second child thread do not affect each other. Therefore, an abnormal state of one of the first function and the second function does not affect running of the other. This avoids a performance problem caused by an abnormal state of the first function or the second function.

Optionally, the first function is used to send the window information to the second process, and the first target information is the target window information. The main thread runs the first function to perform the following operations: obtaining current window information, determining target window information based on the current window information, where the target window information is window information other than window information including a preset window type in the current window information; and if determining based on the current window information that a window changes, calling the first child thread based on the target window information, to transfer the target window information to the first child thread.

For example, the preset window type may be a window type of a window that cannot be directly operated by a user on a screen. For example, the preset window type includes one or more of the following: an invisible window type, or a non-input channel window type.

In this application, the target window information sent by the first function to the second process is obtained by screening the current window information. This screening can greatly decrease a data amount of window information that needs to be sent to the second process, to optimize a load condition and avoid a stability problem to some extent.

Optionally, the first function is used to send the window information to the second process, the first target information is the target window information, and the operation in which the first child thread sends the first target information to the second process after receiving the first target information transferred by the main thread may be as follows: After receiving the target window information transferred by the main thread, the first child thread determines a time interval between a moment of receiving the target window information and a moment of sending window information to the second process last time, and sends the target window information to the second process based on the time interval.

In this application, the first child thread may send the target window information to the second process based on the time interval between the moment of receiving the target window information and the moment of sending the window information to the second process last time, to reduce a sending frequency of window information.

The operation in which the first child thread sends the target window information to the second process based on the time interval may be as follows: When the time interval is greater than or equal to first duration, the first child thread sends the target window information to the second process; or when the time interval is less than the first duration, if not receiving a next piece of window information within the first duration after receiving the target window information, the first child thread sends the target window information to the second process.

The first duration is greater than a frame time interval of a display. Optionally, the first duration may alternatively be less than or equal to m times the frame time interval. Herein, m is greater than 1, for example, m may be 2 or 3.

In this application, after receiving the target window information, only when the time interval between the moment of receiving the target window information and the moment of sending the window information last time is greater than the frame time interval of the display, the first child thread sends the target window information to the second process. In this case, the window information may be sent at frame intervals. This reduces a sending frequency of the window information, optimizes a load condition, and avoids a stability problem.

It should be noted that, when the first duration is greater than m-1 times the frame time interval and less than or equal to m times the frame time interval, the first child thread sends window information to the second process once at an interval of at least m-1 image frames. For example, when the first duration is greater than the frame time interval and less than or equal to twice the frame time interval, the first child thread sends window information to the second process once at an interval of at least one image frame.

Further, when the time interval is less than the first duration, if not receiving a next piece of window information within the first duration after receiving the target window information, the first child thread sends the target window information to the second process. In this case, because the first duration is greater than the frame time interval, the first child thread sends window information to the second process once at an interval of at least the frame time interval. This reduces the sending frequency of the window information, to optimize the load condition and avoid the stability problem.

Optionally, after receiving the target window information, when the time interval between the moment of receiving the target window information and the moment of sending the window information to the second process last time is less than the first duration, the first child thread may store the target window information in a task queue, and wait for the first duration. Then, if not receiving a next piece of window information within the first duration after receiving the target window information, the first child thread sends the target window information in the task queue to the second process; or if receiving the next piece of window information within the first duration after receiving the target window information, the first child thread discards the target window information in the task queue, and send the next piece of window information to the second process.

It may be understood that the window information in the task queue is window information that has been received by the first child thread and has not been sent to the second process. In this case, after receiving the target window information transferred by the main thread, the first child thread may first determine whether window information exists in the task queue. If the window information exists in the task queue, it indicates that there is an interval of at least the window information existing in the task queue between the target window information and the window information sent to the second process last time, that is, it indicates that the time interval between the moment when the first child thread receives the target window information and the moment when the first child thread sends the window information to the second process last time is at least greater than the frame time interval. Therefore, the first child thread can discard the window information in the task queue and send the target window information to the second process. If the window information does not exist in the task queue, the time interval between the moment of receiving the target window information and the moment of sending the window information to the second process last time can be determined, and the target window information is sent to the second process based on the time interval. In this way, whether the target window information can be sent can be quickly determined by using the task queue.

Optionally, the main thread sets a target variable to a first variable value if receiving a first message, where the first message indicates a beginning of a start animation or an exit animation of an application; or the main thread sets the target variable to a second variable value if receiving a second message, where the second message indicates an end of the start animation or the exit animation.

In this case, after receiving the target window information transferred by the main thread, if determining that the target variable is the second variable value, the first child thread sends the target window information to the second process; or if determining that the target variable is the first variable value, the first child thread determines the time interval between the moment of receiving the target window information and the moment of sending the window information to the second process last time, and sending the target window information to the second process based on the time interval.

In this application, a load reduction solution of sending the window information at the frame interval can be implemented in a process in which the application is in the start animation or the exit animation. The start animation or the exit animation means an animation displayed when the application starts or exits. Because a window operation is unlikely to be performed when the application is in the start animation or the exit animation, sending the window information at the frame interval does not affect a user operation in this scenario.

Optionally, the operation in which the main thread sets the target variable to the first variable value if receiving the first message may be as follows: If receiving the first message and determining that a refresh rate of the display is greater than or equal to a preset refresh rate, the main thread sets the target variable to the first variable value.

In this application, a load reduction solution of sending the window information at the frame interval can be implemented when the application is in the start animation or the exit animation and the refresh rate of the display is greater than or equal to the preset refresh rate. The preset refresh rate may be set in advance, and the preset refresh rate may be set to be large. For example, the preset refresh rate may be 90 Hz or 120 Hz. Because the refresh rate of the display is greater than or equal to the preset refresh rate, that is, the refresh rate of the display is high, sending the window information at the frame interval does not cause freezing.

Optionally, if not receiving the second message within second duration after setting the target variable to the first variable value, the main thread sets the target variable to a second variable value.

If the main thread does not receive the second message within the second duration after setting the target variable to the first variable value, it indicates that an effective time of the load reduction solution reaches the second duration, that is, the effective time of the load reduction solution is too long. In this case, the main thread does not receive the second message yet, it indicates that some errors may occur. Therefore, in this case, the main thread may actively disable the load reduction solution, that is, the main thread may set the target variable to the second variable value. Optionally, in this case, the main thread may further print a log, so that a person skilled in the art can confirm an anomaly based on the log in a time manner.

Optionally, the operation in which the first child thread sends the first target information to the second process may be as follows: The first child thread sends the first target information to the second process by using a binder driver.

Specifically, the first child thread may include the first target information in a binder message, and send the binder message to a binder driver. After receiving the binder message, the binder driver may send the binder message to a binder thread in a binder thread pool of the second process for processing. Optionally, the binder thread may transfer the first target information in the binder message to another thread in the second process for processing. For example, the first target information is the target window information, the second process may be the SystemServer process, and the SystemServer process includes the InputDispatcher thread. After receiving the binder message sent by the binder driver, a binder thread in the SystemServer process may transfer the target window information in the binder message to the InputDispatcher thread, and the InputDispatcher thread may deliver a touch event based on the target window information.

According to a second aspect, an information sending method is provided. In this method, a main thread of a SurfaceFlinger process creates a third child thread, where the third child thread can be called by the main thread through an updateInputFlinger function. The main thread runs the updateInputFlinger function to perform the following operations: obtaining current window information, determining target window information based on the current window information, and transferring the target window information to the third child thread, where the target window information is window information other than window information including a preset window type in the current window information. After receiving the target window information transferred by the main thread, the third child thread sends the target window information to a second process.

For example, the third child thread may be the foregoing first child thread or the foregoing second child thread. Alternatively, the third child thread can be called by the main thread through a ReleaseBuffer function, that is, the third child thread can execute sending tasks of the updateInputFlinger function and the ReleaseBuffer function in a serial manner.

The preset window type may be set in advance, for example, may be set in advance by a person skilled in the art according to a related requirement. For example, the preset window type may be a window type of a window that cannot be directly operated by a user on a screen. For example, the preset window type includes one or more of the following: an invisible window type, or a non-input channel window type.

In this application, the target window information sent by the updateInputFlinger function to the second process is obtained by screening the current window information. Through screening, a data amount of window information that needs to be sent to the second process can be greatly decreased, to optimize a load condition and avoid a stability problem to some extent.

Optionally, when running the updateInputFlinger function, after obtaining the target window information, the main thread can directly call the third child thread based on the target window information, to transfer the target window information to the third child thread. Alternatively, when running the updateInputFlinger function, after obtaining the target window information, the main thread can call the third child thread based on the target window information when determining that a window changes based on the current window information, to transfer the target window information to the third child thread. In other words, the main thread can call the third child thread to send the target window information to the second process when the window changes. This can reduce the sending frequency of the window information, to optimize the load condition and avoid the stability problem.

According to a third aspect, an electronic device is provided. A structure of the electronic device includes a processor and a memory. The memory is configured to store a program supporting the electronic device to perform the information sending method according to the first aspect or the second aspect, and store data during implementation of the information sending method according to the first aspect or the second aspect. The processor is configured to execute the program stored in the memory. The electronic device may further include a communication bus, and the communication bus is configured to establish a connection between the processor and the memory.

According to a fourth aspect, a computer-readable storage medium is provided. The computer-readable storage medium stores instructions. When the instructions are run on a computer, the computer is enabled to perform the information sending method according to the first aspect or the second aspect.

According to a fifth aspect, a computer program product including instructions is provided. When the computer program product runs on a computer, the computer is enabled to perform the information sending method according to the first aspect or the second aspect.

The technical effects obtained in the third aspect, the fourth aspect, and the fifth aspect are similar to the technical effects obtained by the corresponding technical means in the first aspect or the second aspect. Details are not described herein again.

### BRIEF DESCRIPTION OF THE DRAWINGS

FIG. 1 is a diagram of a first thread status according to an embodiment of this application;
FIG. 2 is a diagram of a second thread status according to an embodiment of this application;
FIG. 3 is a diagram of a third thread status and a log record according to an embodiment of this application;
FIG. 4 is a diagram of a structure of an electronic device according to an embodiment of this application;
FIG. 5 is a block diagram of a software system of an electronic device according to an embodiment of this application;
FIG. 6 is a flowchart of a first information sending method according to an embodiment of this application;
FIG. 7 is a flowchart of a second information sending method according to an embodiment of this application;
FIG. 8 is a diagram of a fourth thread status according to an embodiment of this application;
FIG. 9 is a diagram of sending window information according to an embodiment of this application;
FIG. 10 is a diagram of a fifth thread status according to an embodiment of this application;
FIG. 11 is a flowchart of a third information sending method according to an embodiment of this application; and
FIG. 12 is a flowchart of a fourth information sending method according to an embodiment of this application.

### DESCRIPTION OF EMBODIMENTS

To make the objectives, technical solutions, and advantages of this application clearer, the following further describes the implementations of this application in detail with reference to the accompanying drawings.

It should be understood that "a plurality of" mentioned in this application means two or more. In the descriptions of this application, unless otherwise stated, "/" means "or". For example, A/B may indicate A or B. The term "and/or" in this specification is merely an association relationship for describing associated objects, and indicates that three relationships may exist. For example, "A and/or B" may indicate the following three cases: Only A exists, both A and B exist, and only B exists. In addition, for ease of describing the technical solutions in this application clearly, the terms such as "first" and "second" are used to distinguish same or similar items with basically same functions and roles. A person skilled in the art may understand that the terms such as "first" and "second" do not limit a quantity or an execution sequence, and the terms such as "first" and "second" do not indicate a definite difference.

Statements such as "one embodiment" or "some embodiments" described in this application mean that a specific characteristic, structure or feature described in this embodiment is included in one or more embodiments of this application. Therefore, statements "in one embodiment", "in some embodiments", "in some other embodiments", "in other embodiments", and the like in different places in this application do not necessarily refer to the same embodiment, but mean that "one or more but not all embodiments", unless otherwise specially emphasized in other ways. In addition, the terms "include", "comprise", "have" and their variations mean "including but not limited to", unless otherwise specially emphasized in other ways.

Before embodiments of this application are described in detail, an application scenario in embodiments of this application is first described.

With continuous popularity of various applications, a screen of an electronic device such as a mobile phone and a tablet computer can display windows of a plurality of applications, providing good visual and operation experience for a user.

Currently, some threads running in the electronic device need to obtain current window information of the electronic device, to implement related processing. For example, in a processing process of a touch event (namely, a touch event) of the electronic device, an InputReander thread and an InputDispatcher thread that run in the electronic device are mainly related. The touch event includes but is not limited to a tap event, a slide event, and the like. After the user touches a display of the electronic device, the InputReander thread may read the touch event, and then notify the InputDispatcher thread to deliver the touch event. When delivering the touch event, the InputDispatcher thread may first determine a window corresponding to the touch event based on window information and a position of the touch event, and then deliver the touch event to the corresponding window. It can be learned that, in a processing process of the touch event, it is very important for the InputDispatcher thread to obtain the window information.

In a related technology, a SurfaceFlinger process runs in the electronic device, and an updateInputFlinger function runs in the SurfaceFlinger process. The updateInputFlinger function is used to obtain current window information of the electronic device, and the window information is synchronized to the InputDispatcher thread. The InputDispatcher thread runs in a SystemServer (system service) process. The SurfaceFlinger process may synchronize the window information in an asynchronous binder communication manner. Specifically, the SurfaceFlinger process may send, by running the updateInputFlinger function and using the binder driver, a binder message that carries window information to a binder thread in a binder thread pool of the SystemServer process, and the binder thread transfers the window information to the InputDispatcher thread.

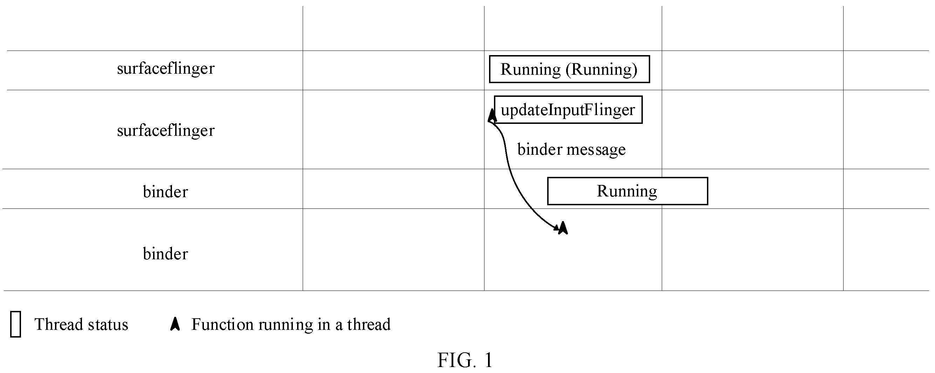

For example, in a diagram of a thread status shown in FIG. 1, an updateInputFlinger function runs in a surfaceflinger thread in a SurfaceFlinger process. The surfaceflinger thread may send, by running the updateInputFlinger function and using a binder driver, a binder message that carries window information to a binder thread in a SystemServer process. The binder thread transfers the window information to the InputDispatcher thread.

However, in this manner, there are the following two problems:
First, in addition to running the updateInputFlinger function, the SurfaceFlinger process runs another function, including but not limited to a ReleaseBuffer function, and the like. A main function of the ReleaseBuffer function is to release buffer space (namely, buffer) that has been used for next use. All functions running in the SurfaceFlinger process call a same child thread to execute a sending task. For example, after obtaining the window information, the SurfaceFlinger process may call, by running the updateInputFlinger function, a child thread to send the window information to the InputDispatcher thread, and the SurfaceFlinger process may further call, by running the ReleaseBuffer function, the child thread to send information. In this case, if the updateInputFlinger function is in an abnormal state, running of the ReleaseBuffer function is affected, resulting in a performance problem.

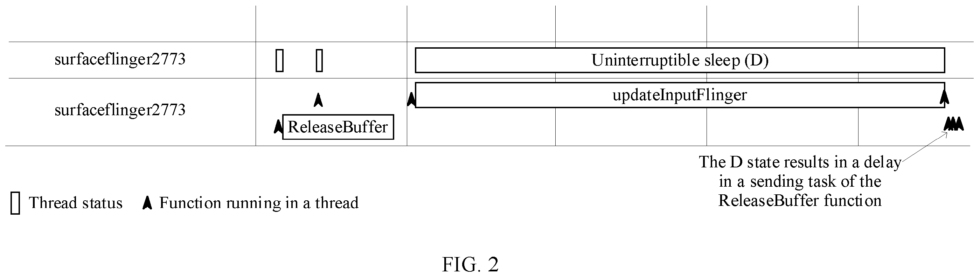

For example, in a diagram of a thread status shown in FIG. 2, when running both the updateInputFlinger function and the ReleaseBuffer function, the SurfaceFlinger process calls a child thread "surfaceflinger2773" to execute a sending task, and the child thread "surfaceflinger2773" executes a sending task of the updateInputFlinger function and a sending task of the ReleaseBuffer function in a serial manner. In this case, if the child thread "surfaceflinger2773" is in an abnormal state in a process of executing the sending task of the updateInputFlinger function, and an uninterruptible sleep (D) state occurs, an execution time period of the sending task of the updateInputFlinger function is long. As a result, the sending task of the ReleaseBuffer function is delayed, and cannot be executed for a long time. In this case, release of a buffer is affected, buffers accumulate, and another thread cannot obtain a buffer for a long time, causing a performance problem.

Second, when synchronizing the window information, the updateInputFlinger function synchronizes all current window information of the electronic device, including window information of a visible window and window information of an invisible window. This may result in a large amount of data in window information in a single synchronization and a large amount of data in a single binder message, causing a stability problem. For example, when the updateInputFlinger function needs to synchronize the window information to the InputDispatcher thread, once the updateInputFlinger function runs for a long time in a specific case, this causes binder message accumulation. A size of the binder thread pool of the SystemServer process is limited, and the SystemServer process needs a large amount of communication. Therefore, when there is a large amount of data in the single binder message, and a large quantity of accumulated binder messages flood the binder thread pool of the SystemServer process in a short time, the binder thread pool of the SystemServer process is filled or even directly freezes, causing a stability problem.

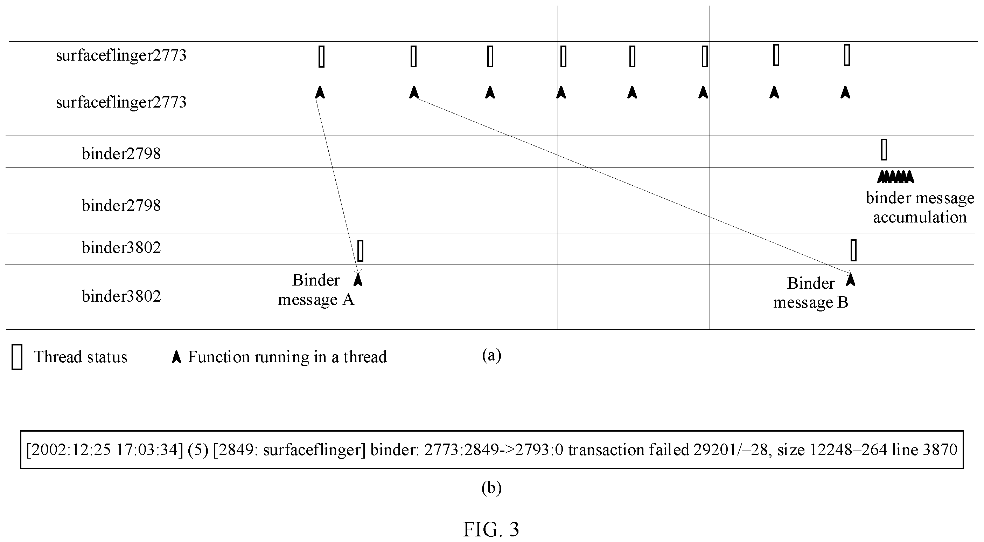

For example, in a diagram of a thread status shown in (a) in FIG. 3, the binder thread pool of the SystemServer process includes a binder thread "binder2798" and a binder thread "binder3802". The SurfaceFlinger process may call, by running the updateInputFlinger function, the child thread "surfaceflinger2773" to execute the sending task. The child thread "surfaceflinger2773" may send, by using the binder driver, the binder message that carries the window information to the binder thread in the SystemServer process for processing. In this case, if a specific binder message is processed for a long time, binder messages received by the binder driver accumulate. For example, as shown in (a) in FIG. 3, the child thread "surfaceflinger2773" sends a binder message A to the binder driver, and the binder driver sends the binder message A to the binder thread "binder3802" for processing. In a processing process of the binder message A, the child thread "surfaceflinger2773" sends a binder message B to the binder driver, and after the binder message A is processed, the binder driver continues to send the binder message B to the binder thread "binder3802" for processing. However, the binder message B is processed for a long time. In a processing process of the binder message B, the child thread "surfaceflinger2773" sends a large quantity of binder messages to the binder driver, resulting in binder message accumulation. After the binder message B is processed, the binder driver sends the large quantity of accumulated binder messages to a binder thread "binder2798" for processing. Because there is a large amount of data in the single binder message, when the large quantity of accumulated binder messages flood the binder thread "binder2798" in a short time, the binder thread pool of the SystemServer process is filled or even directly freezes, causing a stability problem. As shown in the log record shown in (b) in FIG. 3, when the large quantity of accumulated binder messages flood the binder thread pool of the SystemServer process in a short time, binder communication between the child thread "surfaceflinger2773" in a SurfaceFlinger process "surfaceflinger2849" and a SystemServer process "systemserver2793" fails, causing a stability problem.

Therefore, an embodiment of this application provides an information sending method. A sending task of an updateInputFlinger function or a sending task of a ReleaseBuffer function is split into a separate child thread, to avoid a performance problem caused by running of the ReleaseBuffer function being affected by an abnormal status of the updateInputFlinger function. In addition, a manner of decreasing a data amount of window information in a single transmission and/or reducing a sending frequency of the window information is used, to optimize the load condition and avoid a stability problem.

The information sending method according to this embodiment of this application may be performed by an electronic device. Various applications may be installed in the electronic device, and the electronic device may display windows of the various applications. For example, the electronic device may be a mobile phone, a palmtop computer, a tablet computer, a notebook computer, a vehicle-mounted device, an ultra-mobile personal computer (ultra-mobile personal computer, UMPC), a personal digital assistant (personal digital assistant, PDA), an augmented reality (augmented reality, AR) device, or a virtual reality (virtual reality, VR) device. This is not limited in embodiments of this application.

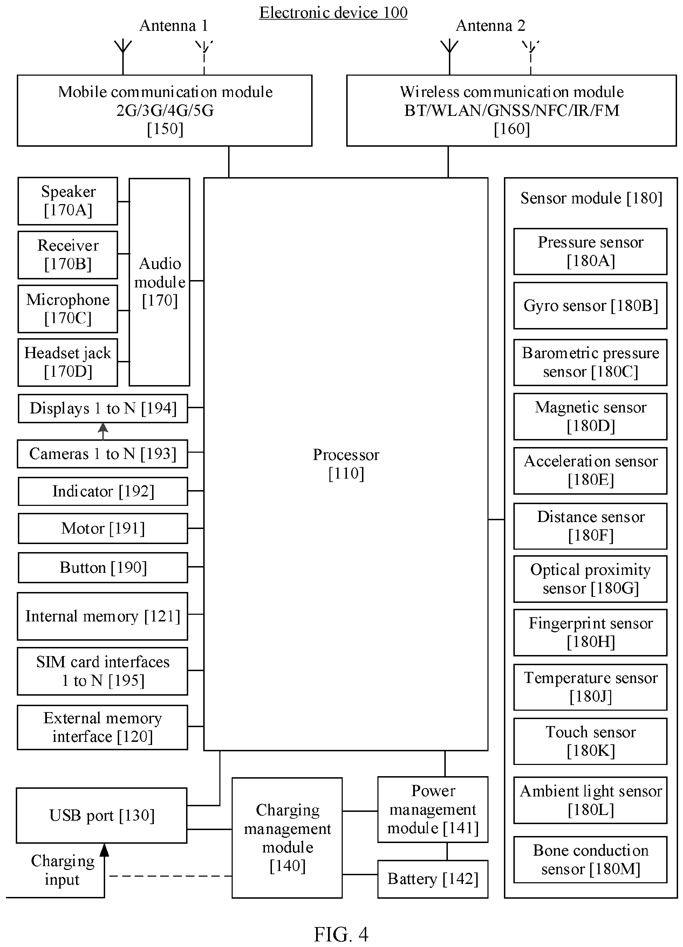

FIG. 4 is a diagram of a structure of an electronic device according to an embodiment of this application. Refer to FIG. 4. The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, some components may be combined, some components may be split, or different component arrangements may be used. The components in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store an instruction or data that has been used or cyclically used by the processor 110. If the processor 110 needs to use the instructions or the data again, the processor 110 may directly invoke the instructions or the data from the memory. This avoids repeated access, reduces wait time of the processor 110, and improves system efficiency.

The external memory interface 120 may be configured to connect to an external storage card such as a Micro SD card, to expand a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code, and the computer-executable program code includes instructions. The processor 110 performs various functional applications and data processing of the electronic device 100 by running the instructions stored in the internal memory 121. The internal memory 121 may include a program storage area and a data storage area. The program storage area may store an operating system, an application required by at least one function (for example, a sound playing function or an image playing function), and the like. The data storage area may store data (such as audio data and a phone book), and the like created when the electronic device 100 is used. In addition, the internal memory 121 may include a high-speed random access memory, and may also include a non-volatile memory, for example, at least one magnetic disk storage device, a flash storage device, or a universal flash storage (universal flash storage, UFS).

The USB port 130 is a port that conforms to a USB standard specification, and may be specifically a mini USB port, a micro USB port, a USB Type-C port, or the like. The USB port 130 may be configured to connect to a charger to charge the electronic device 100, or may be configured to transmit data between the electronic device 100 and a peripheral device, or may be configured to connect to a headset for playing audio through the headset. The USB port 130 may be further configured to be connected to another device such as an AR device.

The charging management module 140 is configured to receive a charging input from the charger. The charger may be a wireless charger or a wired charger. In some embodiments of wired charging, the charging management module 140 may receive a charging input of a wired charger through the USB port 130. In some embodiments of wireless charging, the charging management module 140 may receive a wireless charging input through a wireless charging coil in the electronic device 100. The charging management module 140 may further supply power to the electronic device 100 by using the power management module 141 while charging the battery 142.

The power management module 141 is configured to connect the battery 142, the charging management module 140, and the processor 110. The power management module 141 receives input of the battery 142 and/or the charging management module 140, to supply power to the processor 110, the internal memory 121, an external memory, the display 194, the camera 193, the wireless communication module 160, and the like. The power management module 141 may be further configured to monitor a parameter like a battery capacity, a battery cycle count, or a battery health status (electric leakage or impedance). In some other embodiments, the power management module 141 may alternatively be disposed in the processor 110. In some other embodiments, the power management module 141 and the charging management module 140 may alternatively be provided in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed to improve antenna utilization. For example, the antenna 1 may be multiplexed as a diversity antenna of a wireless local area network. In some other embodiments, the antennas may be used in combination with a tuning switch.

The mobile communication module 150 may provide a wireless communication solution that is applied to the electronic device 100 and that includes 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be arranged in the processor 110. In some embodiments, at least some of the functional modules of the mobile communication module 150 may be disposed in a same device as at least some of modules of the processor 110.

The wireless communication module 160 may provide a wireless communication solution that is applied to the electronic device 100 and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave by using the antenna 2, performs frequency modulation on the electromagnetic wave signal and filters the electromagnetic wave signal, and sends a processed signal to the processor 110. The wireless communication module 160 may also receive a to-be-sent signal from the processor 110, perform frequency modulation on and amplify the to-be-sent signal, and convert the to-be-sent signal into an electromagnetic wave by using the antenna 2 for radiation.

The electronic device 100 implements a display function through the GPU, the display 194, the application processor, and the like. The GPU is a microprocessor for image processing, and is connected to the display 194 and the application processor. The GPU is configured to perform mathematical and geometric calculation for graphic rendering. The processor 110 may include one or more GPUs, which execute program instructions to generate or change display information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light emitting diode, AMOLED), a flexible light-emitting diode (flex light-emitting diode, FLED), a Miniled, a MicroLed, a Micro-oLed, quantum dot light-emitting diodes (quantum dot light emitting diodes, QLED), or the like. In some embodiments, the electronic device 100 may include 1 or N displays 194, and N is an integer greater than 1.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation on or near the touch sensor. The touch sensor 180K may transfer the detected touch operation to the application processor to determine a touch event type. A visual output related to the touch operation may be provided through the display 194. In some other embodiments, the touch sensor 180K may also be disposed on a surface of the electronic device 100 at a position different from that of the display 194.

The electronic device 100 may implement a shooting function through the ISP, the camera 193, the video codec, the GPU, the display 194, the application processor, and the like.

The ISP is configured to process data fed back by the camera 193. For example, during shooting, a shutter is pressed, and light is transferred to a photosensitive element of the camera through a lens. The photosensitive element of the camera converts an optical signal into an electrical signal, and transfers the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a still image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP for converting the electrical signal into a digital image signal. The ISP outputs the digital image signal to the DSP for processing. The DSP converts the digital image signal into an image signal in a standard format like an RGB format or a YUV format. In some embodiments, the electronic device 100 may include 1 or N cameras 193, where N is an integer greater than 1.

The electronic device 100 may implement an audio function such as music playing or recording by using the audio module 170, the speaker 170A, the telephone receiver 170B, the microphone 170C, the headset jack 170D, the application processor, and the like.

The audio module 170 is configured to convert digital audio information into an analog audio signal output, and is further configured to convert an analog audio input into a digital audio signal. The audio module 170 may be further configured to: encode and decode an audio signal. In some embodiments, the audio module 170 may be disposed in the processor 110, or some functional modules of the audio module 170 may be disposed in the processor 110.

The button 190 includes a power button, a volume button, and the like. The button 190 may be a mechanical button, or may be a touch key. The electronic device 100 may receive a button input, and generate a button signal input related to user settings and function control of the electronic device 100.

The motor 191 may generate a vibration prompt. The motor 191 may be configured to produce an incoming call vibration prompt and a touch vibration feedback. For example, touch operations performed on different applications (for example, photo taking and audio playing) may correspond to different vibration feedback effect. The motor may also correspond to different vibration feedback effect for touch operations applied to different areas of the display 194. Different application scenarios (for example, a time prompt, information receiving, an alarm clock, and a game) may also correspond to different vibration feedback effect. Touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect a SIM card. The SIM card may be inserted into the SIM card interface 195 or removed from the SIM card interface 195, to implement contact with or separation from the electronic device 100. The electronic device 100 may support one or N SIM card interfaces, where N is an integer greater than 1. The SIM card interface 195 can support a nano-SIM card, a micro-SIM card, a SIM card, and the like. A plurality of cards may be inserted into a same SIM card interface 195 at the same time. The plurality of cards may be of a same type or different types. The SIM card interface 195 is compatible to different types of SIM cards. The SIM card interface 195 may also be compatible with an external storage card. The electronic device 100 interacts with a network through the SIM card, to implement functions such as conversation and data communication. In some embodiments, the electronic device 100 uses an eSIM, that is, an embedded SIM card. The eSIM card may be embedded into the electronic device 100, and cannot be separated from the electronic device 100.

A software system of the electronic device 100 is described below.

A software system of the electronic device 100 may use a layered architecture, an event-driven architecture, a microkernel architecture, a micro service architecture, or a cloud architecture. In this embodiment of this application, the software system of the electronic device 100 is described by using an Android (Android) system with the layered architecture as an example.

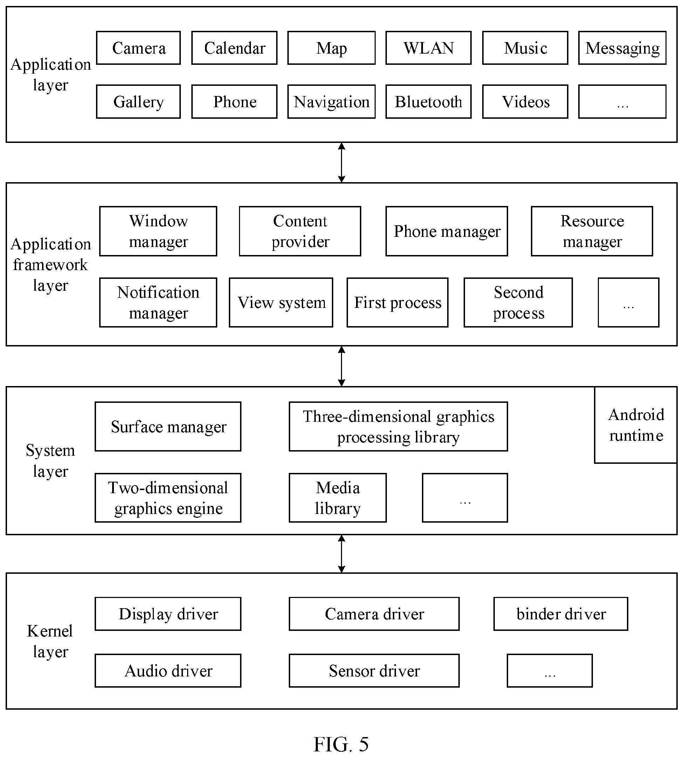

FIG. 5 is a block diagram of a software system of the electronic device 100 according to an embodiment of this application. Refer to FIG. 5. In a layered architecture, software is divided into several layers, and each layer has a clear role and task. The layers communicate with each other through a software interface. In some embodiments, an Android system is divided into an application layer, an application framework layer, an Android runtime (Android Runtime) and system layer, and a kernel layer.

The application layer may include a series of application packages. As shown in FIG. 5, the application packages may include applications such as camera, gallery, calendar, phone, map, navigation, WLAN, Bluetooth, music, videos, and messaging.

The application framework layer provides an application programming interface (application programming interface, API) and a programming framework for an application at the application layer. The application framework layer includes some predefined functions.

As shown in FIG. 5, the application framework layer may include a window manager, a content provider, a view system, a phone manager, a resource manager, a notification manager, and the like. The window manager is configured to manage a window program. The window manager can obtain a size of a display, determine whether there is a status bar, lock a screen, capture a screen, and the like. The content provider is configured to: store and obtain data and make the data accessible to an application. The data may include a video, an image, audio, calls made and answered, a browsing history, a bookmark, a phonebook, and the like. The view system includes a visual control such as a control for text display or a control for picture display. The view system may be configured to construct a display interface of an application. The display interface may include one or more views, for example, include a view for displaying a short message notification icon, include a view for text display, and include a view for picture display. The phone manager is configured to provide a communication function of the electronic device 100, such as management of a call state (including answering and hanging up). The resource manager provides various resources, for example, a localized character string, an icon, a picture, a layout file, and a video file, for an application. The notification manager enables the application to display notification information in the status bar, and may be used to transmit a notification-type message. The displayed information may automatically disappear after a short pause without user interaction. For example, the notification manager is configured to notify download completion, a message notification, and the like. The notification manager may alternatively be a notification that appears on a top status bar of the system in a form of a graph or a scroll bar text, for example, a notification of an application running in the background. The notification manager may alternatively be a notification that appears on a screen in a form of a dialog window. For example, text information is displayed in the status bar, an alert tone is made, the electronic device vibrates, or an indicator blinks.

As shown in FIG. 5, the application framework layer may further run a first process and a second process, and the first process may perform asynchronous binder communication with the second process.

In some embodiments, the first process can obtain window information, and send the window information to the second process in an asynchronous binder communication manner, so that the second process performs related processing based on the window information.

For example, the first process may be a SurfaceFlinger process. The second process may be a SystemServer process. The SurfaceFlinger process can receive graphic data from a plurality of sources, combine the graphic data, and send composed data to a display for rendering. The SystemServer process may create and run a core service of the system. The SurfaceFlinger process may perform asynchronous binder communication with the SystemServer process. Specifically, an updateInputFlinger function runs in the SurfaceFlinger process, and an InputDispatcher thread exists in the SystemServer process. The SurfaceFlinger process can obtain window information by running the updateInputFlinger function, and send the window information to the InputDispatcher thread in the SystemServer process in an asynchronous binder communication manner, so that the InputDispatcher thread delivers a touch event based on the window information.

In some other embodiments, the first process may send buffer space release information to the second process in the asynchronous binder communication manner, to indicate the second process to release buffer space.

For example, the first process may be a SurfaceFlinger process. The second process may be a process to which a RenderThread belongs. The RenderThread is used to draw an image frame. The SurfaceFlinger process may perform asynchronous binder communication with the process to which the RenderThread belongs. Specifically, a ReleaseBuffer function runs in the SurfaceFlinger process. The SurfaceFlinger process may send, by running the ReleaseBuffer function, the buffer space release information to the RenderThread in the asynchronous binder communication manner, to indicate the RenderThread to release buffer space.

The Android runtime includes a kernel library and a virtual machine. The Android runtime is responsible for scheduling and managing the Android system. The kernel library includes two parts: a function to be called in Java language and a kernel library of Android. The application layer and the application framework layer run on the virtual machine. The virtual machine executes Java files at the application layer and the application framework layer as binary files. The virtual machine is used to perform functions such as object lifecycle management, stack management, thread management, security and exception management, and garbage collection.

The system layer may include a plurality of functional modules, for example, a surface manager (surface manager), a media library (Media Libraries), a three-dimensional graphics processing library (for example, OpenGL ES), and a two-dimensional graphics engine (for example, SGL). The surface manager is configured to: manage a display subsystem, and provide fusion of 2D and 3D layers for a plurality of applications. The media library supports playback and recording of various common audio and video formats, as well as still image files, and the like. The media library may support a plurality of audio and video encoding formats such as MPEG4, H.264, MP3, AAC, AMR, JPG, and PNG. The three-dimensional graphics processing library is used to implement three-dimensional graphics drawing, image rendering, compositing, layer processing, and the like. The two-dimensional graphics engine is a drawing engine for two-dimensional drawing.

The kernel layer is a layer between hardware and software. The kernel layer may include a display driver, a camera driver, an audio driver, a sensor driver, a binder driver, and the like.

The first process and the second process in the application framework layer may perform asynchronous binder communication by using the binder driver. Specifically, the second process may have a binder thread pool. The first process may include the foregoing window information or buffer space release information in a binder message, and send the binder message to the binder driver. The binder driver may send the binder message to a binder thread in the binder thread pool of the second process for processing.

For example, the first process may be a SurfaceFlinger process. The second process may be a SystemServer process. The updateInputFlinger function runs in the SurfaceFlinger process, and an InputDispatcher thread exists in the SystemServer process. The SurfaceFlinger process can obtain the window information by running the updateInputFlinger function, include the window information in the binder message, and send the binder message to the binder driver. The binder driver may send the binder message to the binder thread in the binder thread pool of the SystemServer process, and the binder thread may transfer the window information to the InputDispatcher thread, so that the InputDispatcher thread delivers the touch event based on the window information.

For another example, the first process may be a SurfaceFlinger process. The second process may be a process to which the RenderThread belongs. The ReleaseBuffer function runs in the SurfaceFlinger process. By running the ReleaseBuffer function, the SurfaceFlinger process may include the buffer space release information in the binder message, and send the binder message to the binder driver. The binder driver may send the binder message to a binder thread in a binder thread pool of the process to which the RenderThread belongs. The binder thread can transfer the buffer space release information to the RenderThread. After receiving the buffer space release information, the RenderThread can release buffer space.

The following describes an information sending method according to an embodiment of this application.

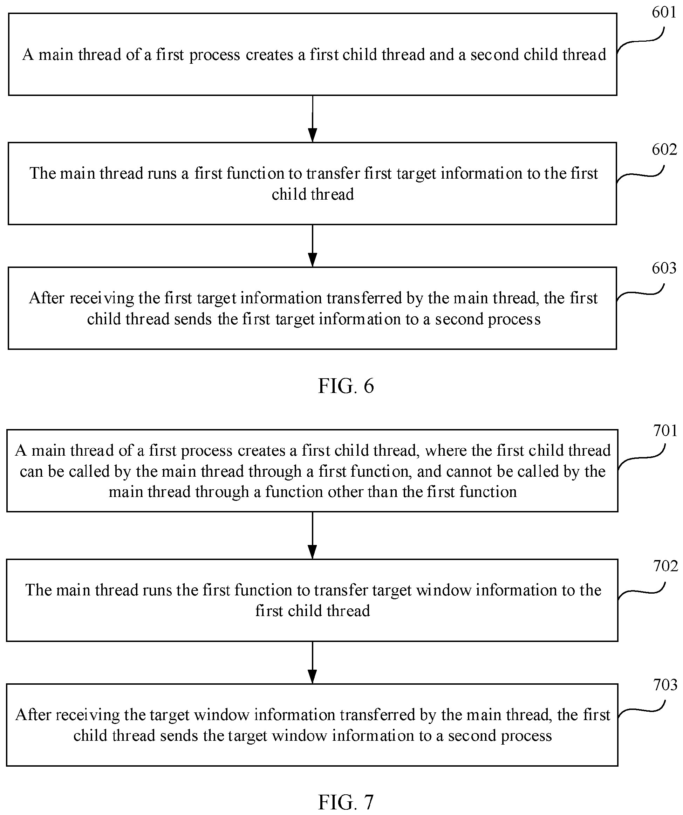

FIG. 6 is a flowchart of an information sending method according to an embodiment of this application. The method is applied to an electronic device. Refer to FIG. 6. The method includes the following steps:
Step 601: A main thread of a first process creates a first child thread and a second child thread.

The first process is a process that can obtain window information. The window information may include window information of some or all of windows displayed by the electronic device, for example, may include window information of a visible window and window information of an invisible window. The window information may include information such as a window position, a window size, and a window type. This is not limited in this embodiment of this application.

For example, the first process may be a SurfaceFlinger process. Certainly, the first process may alternatively be another process that can obtain the window information. This is not uniquely limited in this embodiment of this application.

After the electronic device creates the first process, the main thread of the first process starts to run. The main thread may create a first child thread and a second child thread in a running process.

The first child thread can be called by the main thread through a first function, and cannot be called by the main thread through a function other than the first function. In this case, the first child thread is used to independently execute a sending task of the first function. Only when running the first function, the main thread can call the first child thread to execute the sending task. The main thread cannot call the first child thread when running another function.

The second child thread can be called by the main thread through a second function other than the first function. In this case, the second child thread is used to execute a sending task of the second function. When running the second function, the main thread can call the second child thread to execute the sending task. Optionally, the second child thread cannot be called by the main thread through a function other than the second function. In this case, the second child thread is used to independently execute the sending task of the second function. Alternatively, the second child thread can be called by the main thread through a function other than the first function and the second function. In this case, the second child thread performs sending tasks of all functions of a plurality of functions in a serial manner.

In this embodiment of this application, the main thread can run at least the first function and the second function. One of the first function and the second function is used to send window information to a second process, and the other is used to indicate the second process to release buffer space. The second process is a process other than the first process. Second processes corresponding to the first function and the second function may be the same or different. For example, the first function may be an updateInputFlinger function, and the second function may be a ReleaseBuffer function. In this case, a second process corresponding to the first function is a process that needs window information, and a second process corresponding to the second function is a process that needs to release buffer space. Alternatively, the first function may be a ReleaseBuffer function, and the second function may be an updateInputFlinger function. In this case, a second process corresponding to the first function is a process that needs to release buffer space, and a second process corresponding to the second function is a process that needs window information.

In this embodiment of this application, the main thread can call, by running the first function, the first child thread to execute the sending task, and the main thread can call, by running the second function, the second child thread to execute the sending task. Running of the first child thread and that of the second child thread do not affect each other. Therefore, an abnormal state of one of the first function and the second function does not affect running of the other. This avoids a performance problem caused by an abnormal state of the first function or the second function.

Step 602: The main thread runs the first function to transfer first target information to the first child thread.

When running the first function, the main thread can call the first child thread based on the first target information, to transfer the first target information to the first child thread. The first target information is information that needs to be sent by the first function to the second process. For example, if the first function is used to send the window information to the second process, the first target information is target window information. Alternatively, if the first function is used to indicate the second process to release buffer space, the first target information is buffer space release information.

Step 603: After receiving the first target information transferred by the main thread, the first child thread sends the first target information to the second process.

After receiving the first target information transferred by the main thread, the first child thread can execute the sending task of the first function to send the first target information to the second process.

In some embodiments, the first child thread may send the first target information to the second process by using a binder driver. Specifically, the first child thread may include the first target information in a binder message, and send the binder message to a binder driver. After receiving the binder message, the binder driver may send the binder message to a binder thread in a binder thread pool of the second process for processing. In some embodiments, the binder thread may transfer the first target information in the binder message to another thread in the second process for processing.

Optionally, the main thread runs the second function to transfer second target information to the second child thread. When running the second function, the main thread can call the second child thread based on the second target information, to transfer the second target information to the second child thread. The second target information is information that needs to be sent by the second function to the second process. For example, if the second function is used to send the window information to the second process, the second target information is target window information. Alternatively, if the second function is used to indicate the second process to release buffer space, the second target information is buffer space release information.

After receiving the second target information transferred by the main thread, the second child thread sends the second target information to the second process. That is, after receiving the second target information transferred by the main thread, the second child thread can execute the sending task of the second function to send the second target information to the second process.

In some embodiments, the second child thread may send the second target information to the second process by using the binder driver. Specifically, the second child thread may include the second target information in a binder message, and send the binder message to a binder driver. After receiving the binder message, the binder driver may send the binder message to a binder thread in a binder thread pool of the second process for processing. In some embodiments, the binder thread may transfer the second target information in the binder message to another thread in the second process for processing.

In this embodiment of this application, the main thread of the first process can run the first function and the second function. One of the first function and the second function is used to send the window information to the second process, and the other is used to indicate the second process to release the buffer space. The main thread may create the first child thread and the second child thread. The first child thread is used to independently execute the sending task of the first function, and the second child thread is used to execute the sending task of the second function. Running of the first child thread and that of the second child thread do not affect each other. Therefore, the abnormal state of one of the first function and the second function does not affect running of the other. This avoids the performance problem caused by an abnormal state of the first function or the second function.

The following uses an example in which the first function is a function used to send the window information to the second process and the first target information is the target window information to describe the foregoing information sending method.

The information sending method is applied to a scenario in which the first process in the electronic device sends the window information to the second process. It should be noted that, during display, a display of the electronic device continuously refreshes screen images. A refresh rate of the display means a quantity of times of refreshing the screen images per second. A screen image displayed by the display each time may be referred to as an image frame. Each time the first process obtains graphic data of one image frame, the first process may send the graphic data to the display for rendering, to complete display of the image frame. In addition, each time the first process obtains the graphic data of the image frame, the first process may further obtain corresponding window information based on the graphic data, and send the window information to the second process. Optionally, the first process may send the window information to the second process in an asynchronous binder communication manner. Specifically, the first process may send, to the binder driver, a binder message that carries the window information, and the binder driver may send the binder message to the binder thread in the binder thread pool of the second process.

FIG. 7 is a flowchart of an information sending method according to an embodiment of this application. The method is applied to an electronic device. Refer to FIG. 7. The method includes the following steps:
Step 701: A main thread of a first process creates a first child thread, where the first child thread can be called by the main thread through a first function, and cannot be called by the main thread through a function other than the first function.

The first process is a process that can obtain window information. The window information may include window information of some or all of windows displayed by the electronic device, for example, may include window information of a visible window and window information of an invisible window. The window information may include information such as a window position, a window size, and a window type. This is not limited in this embodiment of this application.

For example, the first process may be a SurfaceFlinger process. Certainly, the first process may alternatively be another process that can obtain the window information. This is not uniquely limited in this embodiment of this application.

After the electronic device creates the first process, the main thread of the first process starts to run. The main thread may create the first child thread in a running process. The first child thread is used to independently execute a sending task of the first function. That is, the main thread can call, through only the first function, the first child thread to execute the sending task, but cannot call the first child thread through another function.

The first function is used to send the window information to a second process. That is, when running the first function, the main thread can obtain the window information, and call the first child thread to send the window information to the second process. For example, the first function may be the updateInputFlinger function. Certainly, the first function may alternatively be another function that can send the window information. This is not uniquely limited in this embodiment of this application.

In this embodiment of this application, the main thread of the first process creates the first child thread that is only used to execute the sending task of the first function. In this case, the sending task of the first function is executed by a separate child thread instead of the main thread. In this case, an abnormal state of the first function does not affect running of another function in the main thread. This avoids a performance problem caused by the abnormal state of the first function.

Further, the main thread may further create a second child thread. The second child thread can be called by the main thread through a second function. In other words, the second child thread may execute a sending task of the second function. The second function is different from the first function. For example, the second function may be a ReleaseBuffer function. Certainly, the second function may alternatively be a function other than the first function in the main thread. This is not uniquely limited in this embodiment of this application.

Optionally, the main thread can call the second child thread only through the second function. In this case, the second child thread independently executes the sending task of the second function. Alternatively, the main thread may call the second child thread through the second function, and call the second child thread through at least one function other than the first function and the second function. In this case, the second child thread performs sending tasks of all functions of a plurality of functions in a serial manner.

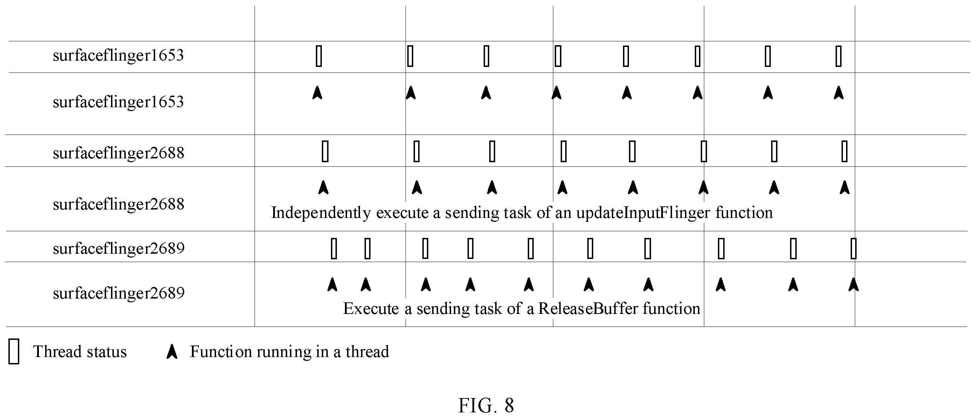

For example, the first process is the SurfaceFlinger process, the first function is the updateInputFlinger function, and the second function is the ReleaseBuffer function. In a diagram of a thread status shown in FIG. 8, the SurfaceFlinger process has a main thread "surfaceflinger1653", and the main thread "surfaceflinger1653" creates a first child thread "surfaceflinger2688" and a second child thread "surfaceflinger2689" in a running process. The first child thread is used to independently execute a sending task of the updateInputFlinger function, and the second child thread is used to execute a sending task of the ReleaseBuffer function. Running of the first child thread and that of the second child thread do not affect each other. In this case, even if the first child thread "surfaceflinger2688" is in an abnormal state when executing the sending task of the updateInputFlinger function, execution of the sending task of the ReleaseBuffer function by the second child thread "surfaceflinger2689" is not affected, avoiding a performance problem.

Step 702: The main thread runs the first function to transfer target window information to the first child thread.

When running the first function, the main thread can obtain the target window information and call the first child thread based on the target window information, to transfer the target window information to the first child thread.

The target window information may be the window information of some or all of the windows displayed by the electronic device. The target window information is window information that needs to be sent by the first function to the second process.

In some embodiments, when running the first function, the main thread can obtain current window information. For example, when obtaining graphic data of a current image frame to be rendered, the main thread can obtain, based on the graphic data by running the first function, window information of all windows included in the current image frame as the current window information. Optionally, when running the first function, the main thread may further determine, based on the current window information, whether a window displayed by the electronic device changes. Specifically, when the current window information is different from historical window information (namely, window information of all the windows included in a previous image frame), it can be determined that the window displayed by the electronic device changes. When the current window information is the same as the historical window information, it can be determined that the window displayed by the electronic device does not change.

Optionally, when running the first function, the main thread may directly determine the current window information as the target window information, or may determine the target window information based on the current window information, where the target window information is other window information other than window information including a preset window type in the current window information, that is, may screen the current window information, and determine the other window information other than the window information including the preset window type in the current window information as the target window information.

The preset window type may be set in advance, for example, may be set in advance by a person skilled in the art according to a related requirement. For example, the preset window type may be a window type of a window that cannot be directly operated by a user on a screen. For example, the preset window type includes one or more of the following: an invisible window type (NOT_VISIBLE), or a non-input channel window type (NO_INPUT_CHANNEL).

In this embodiment of this application, the target window information sent by the first function to the second process is obtained by screening the current window information. This screening can greatly decrease a data amount of window information that needs to be sent to the second process, and decrease a data amount of a binder message carrying window information to be subsequently sent to the second process, to optimize a load condition and avoid a stability problem to some extent.

For example, as shown in Table 1, in a related technology, a data amount of current window information that needs to be sent is greater than or equal to a data amount of target window information that needs to be sent in this embodiment of this application. In addition, as a quantity of open applications increases, in comparison with the related technology, in this embodiment of this application, the current window information is screened, to greatly decrease the data amount of target window information that needs to be sent. This can help avoid a stability problem to some extent.

**Table 1**

| Quantity of open applications/ pieces | Related technology | | This application | | |
|---|---|---|---|---|---|
| | Quantity of windows/pieces | Data amount of current window information/bytes | Quantity of windows/ pieces | Data amount of target window information/bytes | Decrease |
| 0 | 20 | 7904 | 20 | 7904 | 0% |
| 5 | 30 | 11824 | 24 | 9472 | 19.8% |
| 10 | 36 | 14176 | 25 | 9864 | 30.4% |
| 15 | 38 | 14960 | 28 | 11040 | 26.2% |
| 20 | 43 | 16920 | 28 | 11040 | 34.7% |
| 25 | 47 | 18488 | 28 | 11040 | 40.2% |
| 30 | 54 | 21232 | 28 | 11040 | 48.0% |
| 35 | 59 | 23192 | 28 | 11040 | 52.3% |
| 40 | 65 | 25544 | 28 | 11040 | 56.7% |

It should be noted that, the data amount of the window information is described in this embodiment of this application merely by using Table 1 as an example, but Table 1 does not constitute a limitation to this embodiment of this application.

For example, the first process is the SurfaceFlinger process, the first function is the updateInputFlinger function, and the second process is a SystemServer process. Even if the updateInputFlinger function runs for a long time in a specific case, causing binder message accumulation, the data amount of the binder message in this embodiment of this application is small, and a total data amount of the accumulated binder messages is also small. In this case, when the accumulated binder messages flood a binder thread pool of the SystemServer process in a short time, the binder thread pool of the SystemServer process is not filled, and a stability problem is not caused.

When running the first function, after obtaining the target window information, the main thread may call the first child thread based on the target window information, to transfer the target window information to the first child thread, so that the first child thread can send the target window information to the second process.

In some embodiments, when running the first function, after obtaining the target window information, the main thread may directly call the first child thread based on the target window information. Alternatively, when the main thread runs the first function, after obtaining the target window information, the main thread can call the first child thread based on the target window information when determining that a window changes based on the current window information. In other words, the main thread can call the first child thread to send the target window information to the second process when the window changes. This can reduce the sending frequency of the window information, to optimize the load condition and avoid the stability problem.

Step 703: After receiving the target window information transferred by the main thread, the first child thread sends the target window information to the second process.

After receiving the target window information transferred by the main thread, the first child thread can execute the sending task of the first function to send the target window information to the second process.

The second process is a process that needs to perform related processing based on the window information. For example, the second process may be the SystemServer process. The SystemServer process includes an InputDispatcher thread, and the InputDispatcher thread can deliver a touch event based on the window information. Certainly, the second process may alternatively be another process that needs to perform related processing based on the window information. This is not uniquely limited in this embodiment of this application.

In some embodiments, the first child thread may send the target window information to the second process by using a binder driver. Specifically, the first child thread may include the target window information in a binder message, and send the binder message to a binder driver. After receiving the binder message, the binder driver may send the binder message to a binder thread in a binder thread pool of the second process for processing. In some embodiments, the binder thread may transfer the target window information in the binder message to another thread in the second process for processing. For example, the second process may be the SystemServer process, and the SystemServer process includes the InputDispatcher thread. After receiving the binder message sent by the binder driver, a binder thread in the SystemServer process can transfer the target window information in the binder message to the InputDispatcher thread, and the InputDispatcher thread can deliver a touch event based on the target window information.

Optionally, the operation in step 703 may include the following steps (1) to (3):
(1) After receiving the target window information transferred by the main thread, the first child thread determines a time interval between a moment of receiving the target window information and a moment of sending window information to the second process last time.

After each time the first child thread sends window information to the second process, the first child thread may record a sending moment. In this way, after receiving the target window information, the first child thread may determine a time interval between the moment of receiving the target window information and the recorded sending moment (namely, the moment of sending the window information to the second process last time).

Then, the first child thread may send the target window information to the second process based on the time interval. Specifically, when the time interval is greater than or equal to first duration, the first child thread may perform the following step (2); or when the time interval is less than the first duration, the first child thread may perform the following step (3).

(2) When the time interval is greater than or equal to the first duration, the first child thread sends the target window information to the second process.

The first duration may be set in advance. For example, the first duration may be preset based on a frame time interval of a display of the electronic device. For example, the first duration may be greater than the frame time interval of the display. Further, the first duration may alternatively be less than or equal to m times the frame time interval. Herein, m is greater than 1, for example, m may be 2 or 3. For example, the first duration may be greater than the frame time interval of the display and less than or equal to twice the frame time interval. In this case, if a refresh rate of the display of the electronic device is 90 Hz (hertz), the frame time interval of the display is 1000÷90≈11.1 ms (millisecond), and the first duration may be greater than 11.1 ms, and less than or equal to 22.2 ms. For example, the first duration may be 16 ms. Alternatively, if the refresh rate of the display of the electronic device is 120 Hz, the frame time interval of the display is 1000÷120≈8.3 ms, the first duration may be greater than 8.3 ms, and less than or equal to 16.6 ms. For example, the first duration may be 16 ms.

In this embodiment of this application, after receiving the target window information, only when the time interval between the moment of receiving the target window information and the moment of sending the window information last time is greater than the frame time interval of the display, the first child thread sends the target window information to the second process. In this case, the window information may be sent at frame intervals. This reduces a sending frequency of the window information, to optimize a load condition and avoid a stability problem.

It should be noted that, when the first duration is greater than m-1 times the frame time interval and less than or equal to m times the frame time interval, the first child thread sends window information to the second process once at an interval of at least m-1 image frames. For example, when the first duration is greater than the frame time interval and less than or equal to twice the frame time interval, the first child thread sends window information to the second process once at an interval of at least one image frame. It is assumed that there are three consecutive image frames: an image frame 1, an image frame 2, and an image frame 3. After the first child thread sends target window information of the image frame 1 to the second process, if the first child thread receives target window information of the image frame 2, the first child thread does not send the target window information of the image frame 2 to the second process. However, after receiving target window information of the image frame 3, the first child thread sends the target window information of the image frame 3 to the second process. In this case, the window information may be sent to the second process at intervals.

(3) When the time interval is less than the first duration, the first child thread waits for the first duration for the target window information.

If the first child thread does not receive a next piece of window information in a process of waiting for the first duration for the target window information, that is, if the first child thread does not receive the next piece of window information within the first duration after receiving the target window information, the first child thread may send the target window information to the second process. In this case, because the first duration is greater than the frame time interval, the first child thread sends window information to the second process once at an interval of at least the frame time interval. This reduces the sending frequency of the window information, to optimize the load condition and avoid the stability problem.

If the first child thread receives the next piece of window information in the process in which the first child thread waits for the first duration for the target window information, because a time interval between two adjacent image frames is the frame time interval, a time interval between a moment when the first child thread receives the next piece of window information and a moment when the first child thread sends window information to the second process last time is greater than the frame time interval, that is, greater than the first duration. Therefore, the first child thread may send the next piece of window information to the second process. In other words, if the first child thread receives the next piece of window information in the process of waiting for the first duration for the target window information, the first child thread may directly send the next piece of window information to the second process.

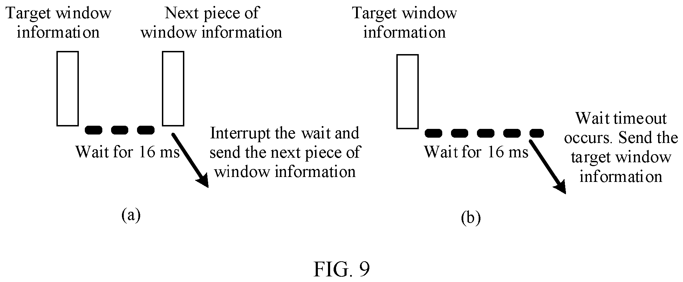

For example, as shown in FIG. 9, it is assumed that the first duration is 16 ms. After receiving the target window information, if the first child thread determines that the time interval between the moment of receiving the target window information and the moment of sending the window information to the second process last time is less than 16 ms, the first child thread waits for 16 ms for the target window information. Then, as shown in (a) in FIG. 9, if the first child thread receives the next piece of window information in the waiting process of the target window information, the wait of the target window information is interrupted. In this case, the first child thread discards the target window information and sends the next piece of window information to the second process. Alternatively, as shown in (b) in FIG. 9, if the first child thread does not receive the next piece of window information in the waiting process of the target window information, after wait timeout occurs, the first child thread may automatically send the target window information to the second process.

Optionally, after receiving the target window information transferred by the main thread, when the time interval between the moment of receiving the target window information and the moment of sending the window information to the second process last time is less than the first duration, the first child thread may store the target window information in a task queue, and wait for the first duration. Then, if not receiving a next piece of window information within the first duration after receiving the target window information, the first child thread sends the target window information in the task queue to the second process; or if receiving the next piece of window information within the first duration after receiving the target window information, the first child thread discards the target window information in the task queue, and send the next piece of window information to the second process.

It may be understood that the window information in the task queue is window information that has been received by the first child thread and has not been sent to the second process. In this case, after receiving the target window information transferred by the main thread in the foregoing step (1), the first child thread may first determine whether window information exists in the task queue. If the window information exists in the task queue, it indicates that there is an interval of at least the window information existing in the task queue between the target window information and the window information sent to the second process last time, that is, it indicates that the time interval between the moment when the first child thread receives the target window information and the moment when the first child thread sends the window information to the second process last time is at least greater than the frame time interval. Therefore, the first child thread can discard the window information in the task queue and directly send the target window information to the second process. If the window information does not exist in the task queue, the first child thread may perform the operation of determining the time interval between the moment of receiving the target window information and the moment of sending the window information to the second process last time in the step (1), and the subsequent steps (2) and (3). In this way, whether the target window information can be sent can be quickly determined by using the task queue.

It should be noted that, in this embodiment of this application, the window information may be sent to the second process at the frame interval by using the foregoing steps (1) to (3). In this case, even if the first function runs for a long time in a specific case, excessive binder message accumulation is not caused. Therefore, when a small quantity of accumulated binder messages flood the binder thread pool of the second process in a short time, the binder thread pool of the second process is not filled, and a stability problem is not caused.

In this embodiment of this application, a load reduction solution in which the first child thread sends the window information by using the foregoing steps (1) to (3). In some embodiments, the load reduction solution may be implemented in all scenarios, that is, each time the first child thread receives a piece of window information transferred by the main thread, the foregoing step (1) to (3) may be performed. In some other embodiments, the load reduction solution may be implemented only in some scenarios, and the received window information is directly sent to the second process in another scenario.

Optionally, the load reduction solution can be implemented in a process in which an application is in a start animation or an exit animation. The start animation or the exit animation means an animation displayed when the application starts or exits. Because a window operation is unlikely to be performed when the application is in the start animation or the exit animation, sending the window information at the frame interval does not affect a user operation in this scenario.

Alternatively, the load reduction solution can be implemented when the application is in the start animation or the exit animation and the refresh rate of the display is greater than or equal to the preset refresh rate. The preset refresh rate may be set in advance, and the preset refresh rate may be set to be large. For example, the preset refresh rate may be 90 Hz or 120 Hz. This is not limited in embodiments of this application. Because the refresh rate of the display is greater than or equal to the preset refresh rate, that is, the refresh rate of the display is high, sending the window information at the frame interval does not cause freezing.

The following describes a process of implementing the load reduction solution in the foregoing two scenarios in detail, which may specifically include the following steps A and B.

Step A: The main thread sets a target variable to a first variable value if receiving a first message.

The first message indicates a beginning of the start animation or the exit animation of the application. For example, the first message may be a binder message. Optionally, the electronic device may include a target module, and the target module can detect whether the application is in a start animation or an exit animation. If the target module detects that the application is in a beginning stage of the start animation or the exit animation, the target module can send the first message to the main thread, to indicate the beginning of the start animation or the exit animation of the application.

The main thread may set the target variable to the first variable value after receiving the first message. The target variable indicates whether to use the load reduction solution. When target variable is the first variable value, it indicates that the load reduction solution is used. When target variable is a second variable value, it indicates that the load reduction solution is not used. The first variable value is different from the second variable value. For example, the first variable value may be true, and the second variable value may be false.

In some embodiments, the main thread may directly set the target variable to the first variable value after receiving the first message. In some other embodiments, after receiving the first message, the main thread may first determine whether the refresh rate of the display is greater than or equal to the preset refresh rate. If the refresh rate of the display is greater than or equal to the preset refresh rate, the target variable is set to the first variable value, or if the refresh rate of the display is less than the preset refresh rate, the variable value of the target variable is not changed, that is, the target variable remains the second variable value.

Optionally, if the target module detects that the application ends the start animation or the exit animation, the target module can send a second message to the main thread, where the second message indicates an end of the start animation or the exit animation. For example, the second message may be the binder message. The main thread may directly set the target variable to the second variable value after receiving the second message.

In some embodiments, if not receiving the second message within second duration after setting the target variable to the first variable value, the main thread may set the target variable to the second variable value.

The second duration may be set in advance, and the second duration may be set to be larger. For example, the second duration may be 2 seconds or 3 seconds. Optionally, the second duration may be greater than maximum duration of the start animation or the exit animation.

The main thread sets the target variable to the first variable value, to indicate that the load reduction solution is used. In this case, the main thread may record an effective time of the load reduction solution, that is, record a time elapsed after the target variable is set to the first variable value. If the main thread does not receive the second message within the second duration after setting the target variable to the first variable value, it indicates that an effective time of the load reduction solution reaches the second duration, that is, the effective time of the load reduction solution exceeds the maximum duration of the start animation or the exit animation. In this case, the main thread does not receive the second message yet, it indicates that some errors may occur. Therefore, in this case, the main thread can actively disable the load reduction solution, that is, the main thread may set the target variable to the second variable value. Optionally, in this case, the main thread can further print a log, so that a person skilled in the art can confirm an anomaly based on the log in a time manner.

Step B: After receiving the target window information transferred by the main thread, if the first child thread determines that target variable is the first variable value, the first child thread performs the load reduction solution provided in the foregoing step (1) to (3).

However, if the first child thread determines that target variable is the second variable value, it indicates that the load reduction solution cannot be currently used. Then, the first child thread may directly send the target window information to the second process.

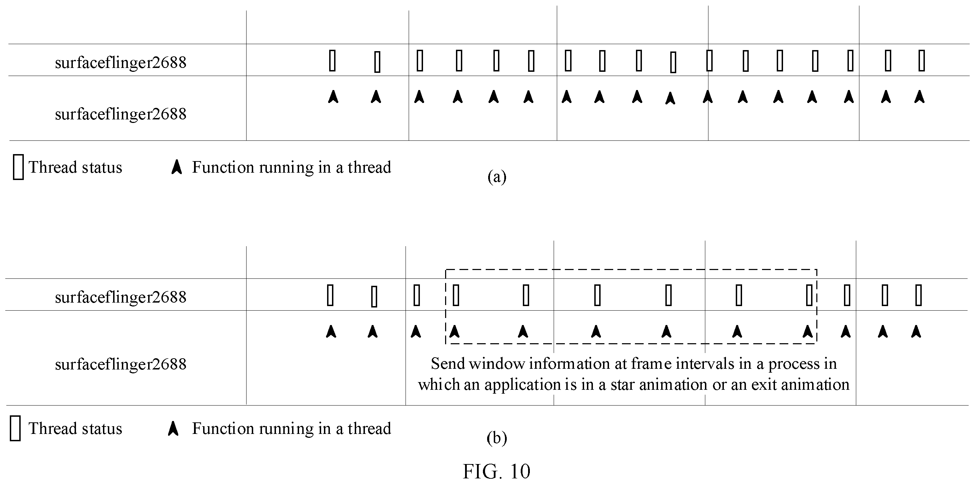

For example, the first process is the SurfaceFlinger process, the first function is the updateInputFlinger function, and the second function is the ReleaseBuffer function. In a diagram of a thread status shown in FIG. 10, the SurfaceFlinger process has a first child thread "surfaceflinger2688", and the first child thread is used to independently execute a sending task of the updateInputFlinger function. As shown in (a) in FIG. 10, when the application is not in the start animation or the exit animation, the first child thread may send window information of each image frame to the second process. As shown in (b) in FIG. 10, in the process in which the application is in the start animation or the exit animation, the first child thread may use the load reduction solution, and send the window information to the second process at the frame interval.

It should be noted that, in this embodiment of this application, the window information that needs to be sent to the second process may be obtained by screening the current window information, and/or the window information may be sent to the second process by using the load reduction solution at the frame interval. This decreases a data amount of window information that needs to be sent in a single transmission and/or reduces a sending frequency of the window information, and also decreases a data amount of a single binder message and/or reduces a sending frequency of the binder message, to optimize a load condition and avoid a stability problem.

In an embodiment of this application, the main thread of the first process creates the first child thread. Then, the main thread runs the first function to obtain the target window information and calls the first child thread based on the target window information. After receiving the target window information transferred by the main thread, the first child thread sends the target window information to a second process. Because the first child thread can be called by the main thread only through the first function, and cannot be called by the main thread through another function, the abnormal state of the first function does not affect running of the another function in the main thread. This avoids a performance problem caused by the abnormal state of the first function.

The following uses an example in which the first function is a function used to indicate the second process to release buffer space and first target information is buffer space release information, to describe the foregoing information sending method.

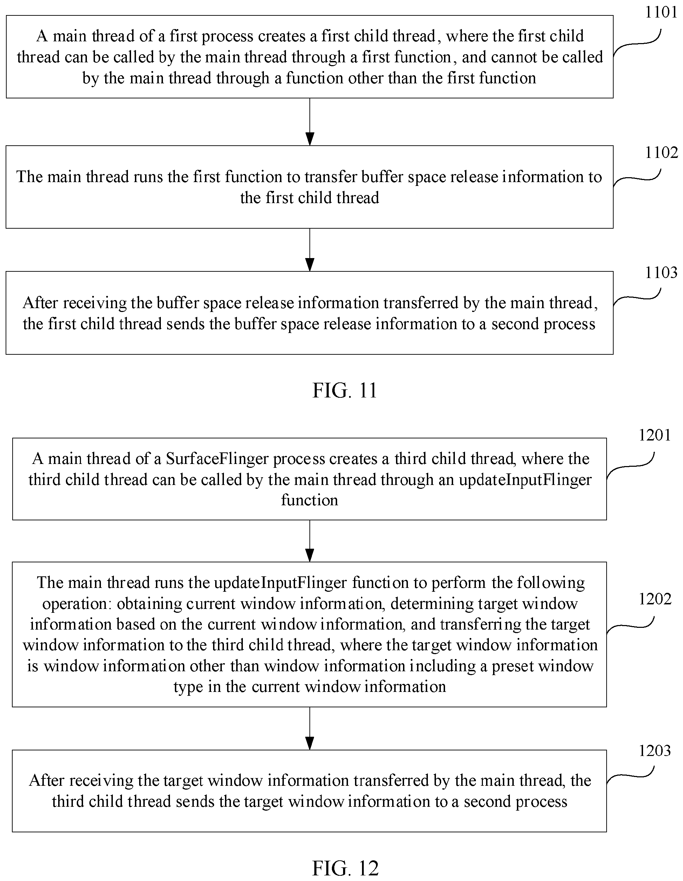

FIG. 11 is a flowchart of an information sending method according to an embodiment of this application, and the method is applied to an electronic device. Refer to FIG. 11. The method includes the following steps:
Step 1101: A main thread of a first process creates a first child thread, where the first child thread can be called by the main thread through a first function, and cannot be called by the main thread through a function other than the first function.

The first process is a process that can obtain window information. The window information may include window information of some or all of windows displayed by the electronic device, for example, may include window information of a visible window and window information of an invisible window. The window information may include information such as a window position, a window size, and a window type. This is not limited in this embodiment of this application.

For example, the first process may be a SurfaceFlinger process. Certainly, the first process may alternatively be another process that can obtain the window information. This is not uniquely limited in this embodiment of this application.

After the electronic device creates the first process, the main thread of the first process starts to run. The main thread may create the first child thread in a running process. The first child thread is used to independently execute a sending task of the first function. That is, the main thread can call, through only the first function, the first child thread to execute the sending task, but cannot call the first child thread through another function.

The first function is used to indicate a second process to release buffer space. That is, when running the first function, the main thread can call the first child thread to send buffer space release information to the second process. For example, the first function may be a ReleaseBuffer function. Certainly, the first function may alternatively be another function that can indicate a process to release buffer space. This is not uniquely limited in this embodiment of this application.

In this embodiment of this application, the main thread of the first process creates the first child thread that is only used to execute the sending task of the first function. In this case, the sending task of the first function is executed by a separate child thread instead of the main thread. In this case, an abnormal state of the another function in the main thread does not affect running of the first function. This avoids a performance problem caused by the abnormal state of the another function.

Further, the main thread may further create a second child thread. The second child thread can be called by the main thread through a second function. In other words, the second child thread may execute a sending task of the second function. The second function is different from the first function. For example, the second function may be an updateInputFlinger function. Certainly, the second function may alternatively be a function other than the first function in the main thread. This is not uniquely limited in this embodiment of this application.

Optionally, the main thread can call the second child thread only through the second function. In this case, the second child thread independently executes the sending task of the second function. Alternatively, the main thread may call the second child thread through the second function, and call the second child thread through at least one function other than the first function and the second function. In this case, the second child thread performs sending tasks of all functions of a plurality of functions in a serial manner.

Step 1102: The main thread runs the first function to transfer the buffer space release information to the first child thread.

When running the first function, the main thread can call the first child thread based on the buffer space release information, to transfer the buffer space release information to the first child thread. The buffer space release information indicates to release buffer space.

Step 1103: After receiving the buffer space release information transferred by the main thread, the first child thread sends the buffer space release information to the second process.

After receiving the buffer space release information transferred by the main thread, the first child thread can execute the sending task of the first function to send the buffer space release information to the second process.

The second process is a process that needs to release buffer space. For example, the second process may be a process to which a RenderThread belongs. Certainly, the second process may alternatively be another process that needs to release buffer space. This is not uniquely limited in this embodiment of this application.

In some embodiments, the first child thread may send the buffer space release information to the second process by using a binder driver. Specifically, the first child thread may include the buffer space release information in a binder message, and send the binder message to the binder driver. After receiving the binder message, the binder driver may send the binder message to a binder thread in a binder thread pool of the second process for processing. In some embodiments, the binder thread may transfer the buffer space release information in the binder message to another thread in the second process for processing. For example, the second process may be the process to which the RenderThread belongs. After receiving the binder message sent by the binder driver, a binder thread in the process to which the RenderThread belongs can transfer the buffer space release information in the binder message to the RenderThread, and the RenderThread can release buffer space based on the buffer space release information.

In an embodiment of this application, the main thread of the first process creates the first child thread. Then, the main thread runs the first function to call the first child thread based on the buffer space release information. After receiving the buffer space release information transferred by the main thread, the first child thread sends the buffer space release information to the second process. Because the first child thread can be called by the main thread only through the first function, and cannot be called by the main thread through another function, the abnormal state of the another function in the main thread does not affect running of the first function. This avoids a performance problem caused by the abnormal state of the another function.

The following describes an information sending method according to an embodiment of this application.

FIG. 12 is a flowchart of an information sending method according to an embodiment of this application, and the method is applied to an electronic device. Refer to FIG. 12. The method includes the following steps:
Step 1201: A main thread of a SurfaceFlinger process creates a third child thread, where the third child thread can be called by the main thread through an updateInputFlinger function.

After the electronic device creates the SurfaceFlinger process, the main thread of the SurfaceFlinger process starts to run. The main thread may create the third child thread in a running process. The third child thread is used to execute a sending task of the updateInputFlinger function. In some embodiments, the third child thread may be the foregoing first child thread or the foregoing second child thread. In some other embodiments, the third child thread can be called by the main thread through a ReleaseBuffer function, that is, the third child thread can execute sending tasks of the updateInputFlinger function and the ReleaseBuffer function in a serial manner.

Step 1202: The main thread runs the updateInputFlinger function to perform the following operations: obtaining current window information, determining target window information based on the current window information, and transferring the target window information to the third child thread, where the target window information is window information other than window information including a preset window type in the current window information.

When running the updateInputFlinger function, the main thread can obtain the current window information. For example, when obtaining graphic data of a current image frame to be rendered, the main thread can obtain, based on the graphic data by running the updateInputFlinger function, window information of all windows included in the current image frame as the current window information. Optionally, when running the updateInputFlinger function, the main thread can further determine, based on the current window information, whether a window displayed by the electronic device changes. Specifically, when the current window information is different from historical window information (namely, window information of all the windows included in a previous image frame), it can be determined that the window displayed by the electronic device changes. When the current window information is the same as the historical window information, it can be determined that the window displayed by the electronic device does not change.

When running the updateInputFlinger function, the main thread may screen the current window information, and determine window information other than the window information including the preset window type in the current window information as the target window information.

The preset window type may be set in advance, for example, may be set in advance by a person skilled in the art according to a related requirement. For example, the preset window type may be a window type of a window that cannot be directly operated by a user on a screen. For example, the preset window type includes one or more of the following: an invisible window type, or a non-input channel window type.

In this embodiment of this application, the target window information sent by the updateInputFlinger function to the second process is obtained by screening the current window information. This screening can greatly decrease a data amount of window information that needs to be sent to the second process, and decrease a data amount of a binder message carrying window information to be subsequently sent to the second process, to optimize a load condition and avoid a stability problem to some extent.

In this case, even if the updateInputFlinger function runs for a long time in a specific case, causing binder message accumulation, the data amount of the binder message in this embodiment of this application is small, and a total data amount of the accumulated binder messages is also small. In this case, when the accumulated binder messages flood a binder thread pool of the second process in a short time, the binder thread pool of the second process is not filled, and a stability problem is not caused.

When running the updateInputFlinger function, after obtaining the target window information, the main thread may call the third child thread based on the target window information, to transfer the target window information to the third child thread, so that the third child thread can send the target window information to the second process.

In some embodiments, when running the updateInputFlinger function, after obtaining the target window information, the main thread may directly call the third child thread based on the target window information. Alternatively, when running the updateInputFlinger function, after obtaining the target window information, the main thread can call the third child thread based on the target window information when determining that a window changes based on the current window information. In other words, the main thread can call the third child thread to send the target window information to the second process when the window changes. This can reduce the sending frequency of the window information, to optimize the load condition and avoid the stability problem.

Step 1203: After receiving the target window information transferred by the main thread, the third child thread sends the target window information to the second process.

After receiving the target window information transferred by the main thread, the third child thread can execute the sending task of the updateInputFlinger function to send the target window information to the second process.

The second process is a process that needs to perform related processing based on the window information. For example, the second process may be the SystemServer process. The SystemServer process includes an InputDispatcher thread, and the InputDispatcher thread can deliver a touch event based on the window information. Certainly, the second process may alternatively be another process that needs to perform related processing based on the window information. This is not uniquely limited in this embodiment of this application.

In some embodiments, the third child thread may send the target window information to the second process by using a binder driver. Specifically, the third child thread may include the target window information in a binder message, and send the binder message to a binder driver. After receiving the binder message, the binder driver may send the binder message to a binder thread in a binder thread pool of the second process for processing. In some embodiments, the binder thread may transfer the target window information in the binder message to another thread in the second process for processing. For example, the second process may be the SystemServer process, and the SystemServer process includes the InputDispatcher thread. After receiving the binder message sent by the binder driver, a binder thread in the SystemServer process can transfer the target window information in the binder message to the InputDispatcher thread, and the InputDispatcher thread can deliver a touch event based on the target window information.

In this embodiment of this application, a main thread of a SurfaceFlinger process creates a third child thread, where the third child thread can be called by the main thread through an updateInputFlinger function. The main thread runs the updateInputFlinger function to perform the following operations: obtaining current window information, determining target window information based on the current window information, and transferring the target window information to the third child thread, where the target window information is window information other than window information including a preset window type in the current window information. After receiving the target window information transferred by the main thread, the third child thread sends the target window information to a second process. In this embodiment of this application, the target window information sent by the updateInputFlinger function to the second process is obtained by screening the current window information. This screening can greatly decrease a data amount of window information that needs to be sent to the second process, to optimize a load condition and avoid a stability problem to some extent.

All or some of the foregoing embodiments may be implemented by software, hardware, firmware, or any combination thereof. When software is used to implement the foregoing embodiments, all or some of the embodiments may be implemented in a form of a computer program. The computer program product includes one or more computer instructions. When the computer instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium, or transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by the computer, or a data storage device such as a server or a data center integrating one or more usable media. The usable medium may be a magnetic medium (for example, a floppy disk, a hard disk drive, or a magnetic tape), an optical medium (for example, a digital versatile disc (Digital Versatile Disc, DVD)), a semiconductor medium (for example, a solid state disk (Solid State Disk, SSD)), or the like.

The foregoing descriptions are optional embodiments provided in this application, but are not intended to limit this application. Any modification, equivalent replacement, improvement, or the like made within the technical scope disclosed in this application shall fall within the protection scope of this application.

## Claims

1. An image display method, wherein the method is applied to an electronic device and comprises:
drawing, by a RenderThread, an image frame;
obtaining, by a SurfaceFlinger process, graphic data of the image frame;
after obtaining the graphic data of the image frame, performing, by the SurfaceFlinger process, composition on the graphic data of the image frame, to obtain a composed image frame;
sending, by the SurfaceFlinger process, the composed image frame for display;
after the graphic data of the image frame is obtained, running the SurfaceFlinger process, to obtain window information;
after the window information is obtained, running the SurfaceFlinger process, to obtain buffer space release information;
sending, by a first thread of the SurfaceFlinger process, the window information to a first process; and
sending, by a second thread of the SurfaceFlinger process, the buffer space release information to a second process, wherein the second thread is different from the first thread.

2. The method according to claim 1, wherein the first process is a SystemServer process.

3. The method according to claim 2, wherein the sending, by a first thread of the SurfaceFlinger process, the window information to a first process comprises:
sending, by the first thread of the SurfaceFlinger process, the window information to an InputDispatcher thread of the System Server process.

4. The method according to any one of claims 1 to 3, wherein the first thread and the second thread are child threads of the SurfaceFlinger process;
the obtaining, by a SurfaceFlinger process, graphic data of the image frame comprises:
obtaining, by a main thread of the SurfaceFlinger process, the graphic data of the image frame;
the performing, by the SurfaceFlinger process, composition on the graphic data of the image frame comprises:
performing, by the main thread of the SurfaceFlinger process, composition on the graphic data of the image frame;
the sending, by the SurfaceFlinger process, the composed image frame for display comprises:
sending, by the main thread of the SurfaceFlinger process, the composed image frame for display;
the running the SurfaceFlinger process, to obtain window information comprises:
running the main thread of the SurfaceFlinger process, to obtain the window information; and
the running the SurfaceFlinger process, to obtain buffer space release information comprises:
the running the main thread of the SurfaceFlinger process, to obtain the buffer space release information.

5. The method according to claim 4, wherein the method further comprises:
creating, by the main thread of the SurfaceFlinger process, the first thread and the second thread.

6. The method according to any one of claims 1 to 5, wherein the second process is a process to which the RenderThread belongs.

7. The method according to any one of claims 1 to 6, wherein the running the SurfaceFlinger process, to obtain window information comprises:
running updateInputFlinger of the SurfaceFlinger process, to obtain the window information.

8. The method according to claim 6, wherein the buffer space release information indicates the RenderThread to release buffer space.

9. The method according to claim 8, wherein the method further comprises:
releasing, by the RenderThread, the buffer space.

10. An information transmission method, wherein the method is applied to an electronic device and comprises:
detecting a touch event;
after the touch event is detected, running a main thread of a SurfaceFlinger process, to obtain window information;
after the window information is obtained, running the main thread of the SurfaceFlinger process, to obtain buffer space release information;
sending, by a first child thread of the SurfaceFlinger process, the window information to a first process; and
sending, by a second child thread of the SurfaceFlinger process, the buffer space release information to a second process, wherein the second child thread is different from the first child thread.

11. The method according to claim 10, wherein the first process is a SystemServer process.

12. The method according to claim 11, wherein the sending, by a first child thread of the SurfaceFlinger process, the window information to a first process comprises:
sending, by the first child thread, the window information to an InputDispatcher thread of the SystemServer process.

13. The method according to any one of claims 10 to 12, wherein the method further comprises:
creating, by the main thread of the SurfaceFlinger process, the first child thread and the second child thread.

14. The method according to any one of claims 10 to 13, wherein the second process is a process to which a RenderThread belongs.

15. The method according to any one of claims 10 to 14, wherein the running a main thread of a SurfaceFlinger process, to obtain window information comprises:
running updateInputFlinger of the main thread of the SurfaceFlinger process, to obtain the window information.

16. The method according to claim 14, wherein the method further comprises:
releasing, by the RenderThread, buffer space.

17. The method according to claim 12, wherein after the sending, by the first child thread, the window information to an InputDispatcher thread of the SystemServer process, the method further comprises:
sending, by the InputDispatcher thread based on the window information, the touch event to a window corresponding to the touch event.

18. An information sending method, wherein the method comprises:
creating, by a main thread of a first process, a first child thread and a second child thread, wherein the first child thread is capable of being called by the main thread through a first function, and is not capable of being called by the main thread through a function other than the first function, the second child thread is capable of being called by the main thread through a second function other than the first function, one of the first function and the second function is used to send window information to a second process, and the other is used to indicate the second process to release buffer space;
running, by the main thread, the first function to transfer first target information to the first child thread; and
sending, by the first child thread, the first target information to the second process after receiving the first target information transferred by the main thread.

19. The method according to claim 18, wherein the first function is used to send the window information to the second process, the first target information is target window information, and the main thread runs the first function to perform the following operations:
obtaining current window information;
determining the target window information based on the current window information, wherein the target window information is window information other than window information comprising a preset window type in the current window information; and
if determining that a window changes based on the current window information, calling the first child thread based on the target window information, to transfer the target window information to the first child thread.

20. The method according to claim 19, wherein the preset window type comprises one or more of the following: an invisible window type, or a non-input channel window type.

21. The method according to any one of claims 18 to 20, wherein the first function is used to send the window information to the second process, the first target information is the target window information, and the sending, by the first child thread, the first target information to the second process after receiving the first target information transferred by the main thread comprises:
after receiving the target window information transferred by the main thread, determining, by the first child thread, a time interval between a moment of receiving the target window information and a moment of sending window information to the second process last time, and sending the target window information to the second process based on the time interval.

22. The method according to claim 21, wherein the sending, by the first child thread, the target window information to the second process based on the time interval comprises:
when the time interval is greater than or equal to first duration, sending, by the first child thread, the target window information to the second process, wherein the first duration is greater than a frame time interval of a display; or
when the time interval is less than the first duration, if not receiving a next piece of window information within the first duration after receiving the target window information, sending, by the first child thread, the target window information to the second process.

23. The method according to any one of claims 18 to 20, wherein the first function is used to send the window information to the second process, the first target information is the target window information, and the sending, by the first child thread, the first target information to the second process after receiving the first target information transferred by the main thread comprises:
after receiving the target window information transferred by the main thread, when window information exists in a task queue, discarding, by the first child thread, the window information in the task queue, and sending the target window information to the second process; or when no window information exists in the task queue, determining, by the first child thread, a time interval between a moment of receiving the target window information and a moment of sending window information to the second process last time, and sending the target window information to the second process based on the time interval, wherein the window information in the task queue is window information that has been received by the first child thread and has not been sent to the second process.

24. The method according to claim 23, wherein the sending, by the first child thread, the target window information to the second process based on the time interval comprises:
when the time interval is greater than or equal to first duration, sending, by the first child thread, the target window information to the second process, wherein the first duration is greater than a frame time interval of a display; or
when the time interval is less than the first duration, storing, by the first child thread, the target window information in the task queue, and if not receiving a next piece of window information within the first duration after receiving the target window information, sending the target window information in the task queue to the second process.

25. The method according to claim 22 or 24, wherein the first duration is less than or equal to twice the frame time interval.

26. The method according to any one of claims 18 to 20, wherein the method further comprises:
setting, by the main thread, a target variable to a first variable value if receiving a first message, wherein the first message indicates a beginning of a start animation or an exit animation of an application; or
setting, by the main thread, the target variable to a second variable value if receiving a second message, wherein the second message indicates an end of the start animation or the exit animation; and
the first function is used to send the window information to the second process, the first target information is the target window information, and the sending, by the first child thread, the first target information to the second process after receiving the first target information transferred by the main thread comprises:
after receiving the target window information transferred by the main thread, if determining that the target variable is the second variable value, sending, by the first child thread, the target window information to the second process; or if determining that the target variable is the first variable value, determining, by the first child thread, a time interval between a moment of receiving the target window information and a moment of sending window information to the second process last time, and sending the target window information to the second process based on the time interval.

27. The method according to claim 26, wherein the setting, by the main thread, a target variable to a first variable value if receiving a first message comprises:
if receiving the first message and determining that a refresh rate of a display is greater than or equal to a preset refresh rate, setting, by the main thread, the target variable to the first variable value.

28. The method according to claim 26 or 27, wherein the method further comprises:
if not receiving the second message within second duration after setting the target variable to the first variable value, setting, by the main thread, the target variable to the second variable value.

29. The method according to one of claims 18 to 28, wherein the sending, by the first child thread, the first target information to the second process comprises:
sending, by the first child thread, the first target information to the second process by using a binder driver.

30. The method according to any one of claims 18 to 29, wherein the first process is a SurfaceFlinger process, one of the first function and the second function is an updateInputFlinger function, the other is a ReleaseBuffer function, and the updateInputFlinger function is used to send window information to an InputDispatcher thread in a SystemServer process.

31. An information sending method, wherein the method comprises:
creating, by a main thread of a SurfaceFlinger process, a third child thread, wherein the third child thread is capable of being called by the main thread through an updateInputFlinger function;
running, by the main thread, the updateInputFlinger function to perform the following operations: obtaining current window information, determining target window information based on the current window information, and transferring the target window information to the third child thread, wherein the target window information is window information other than window information comprising a preset window type in the current window information; and
after receiving the target window information transferred by the main thread, sending, by the third child thread, the target window information to a second process.

32. The method according to claim 31, wherein the transferring the target window information to the third child thread comprises:
if determining that a window changes based on the current window information, transferring the target window information to the third child thread.

33. The method according to claim 31 or 32, wherein the preset window type comprises one or more of the following: an invisible window type, or a non-input channel window type.

34. An electronic device, wherein the electronic device comprises a display, a memory, and one or more processors, the display and the memory are coupled to the processor, the memory stores computer program code, the computer program code comprises computer instructions, and when the computer instructions are executed by the processor, the electronic device is enabled to perform the method according to any one of claims 1 to 33.

35. A computer-readable storage medium, comprising computer instructions, wherein when the computer instructions are run on an electronic device, the electronic device is enabled to perform the method according to any one of claims 1 to 33.

36. A chip system, wherein the chip system comprises a processor, and the processor is configured to invoke a computer program in a memory to perform the method according to any one of claims 1 to 33.
